# EUROPÄISCHE PATENTANMELDUNG

(11) **EP 1 489 344 A2**
(43) Veröffentlichungstag der Anmeldung: **22.12.2004**
(21) Anmeldenummer: 04013236.7
(22) Anmeldetag: 04.06.2004
(51) Int. Cl.: F16L 33/207, F16L 13/00, F16L 13/14

(54) **Kombination eines Pressfittings mit einem Presswerkzeug, Pressfitting und Presshülse**

(30) Priorität: 17.06.2003 DE 10327503
(71) Anmelder: VETEC GmbH Verbindungstechnologie für Versorgungssysteme, 97497 Dingolshausen (DE)
(72) Erfinder:
(74) Vertreter: Müller, Enno, Dipl.-Ing.

(57) **Zusammenfassung**

Unter der Zielrichtung, eine Kombination aus einem Pressfitting (1) und einem Presswerkzeug (3) anzugeben, die auch unter Berücksichtigung von Toleranzen möglichst zuverlässig zu einem zufriedenstellenden Verpressergebnis führt, schlägt die Erfindung eine solche Kombination vor, bei welcher der Pressfitting (1) mindestens zwei umlaufende Nuten (5,6) deren Nutwände (9,10) eine unterschiedliche Höhe aufweisen zur Aufnahme von Dichtungsringen (7) aufweist und an dem Presswerkzeug (3) im Pressbereich mindestens zwei umlaufende Ausformungen (8) ausgebildet sind, wobei weiter die Ausformungen als Rippen (8) gestaltet sind und im Verpresszustand eine erste Rippe einer ersten Nut (5) des Pressfittings und eine zweite Rippe einer zweiten Nut (6) des Pressfittings zugeordnet ist und jedenfalls die erste oder die zweite Rippe in Überdeckung zu der ersten (5) bzw. zweiten (6) Nut ausgebildet ist.

Die Presshülse (2) weist zwei nach radial außen vorstehende, sickenartige Ausformungen (11,12) auf, deren Abstand an die Breite des Presswerkzeuges (3) angepasst ist. Am vorderen Ende der Presshülse (2) ist eine radial nach innen gerichtete Abwinklung (13) ausgebildet, die zur Halterung der Presshülse (2) an dem Pressfitting (1) in eine umlaufende Nut (14) des Pressfittings (1) eingreift und wobei die Abwinklung aus einer Mehrzahl von in Umfangsrichtung kreisabschnittsförmig freigeschnittenen Bereichen (13) besteht.

## Beschreibung

Die Erfindung betrifft zunächst die Kombination eines Pressfittings mit einem ggf. aus zwei Pressbacken bestehenden Presswerkzeug, wobei der Pressfitting mindestens zwei umlaufende Nuten zur Aufnahme von Dichtungsringen aufweist und an dem Presswerkzeug im Pressbereich mindestens zwei umlaufende Ausformungen ausgebildet sind.

Zum Stand der Technik ist etwa auf die DE 197 21 078 A1 zu verweisen. Hieraus ist es bekannt, ein Presswerkzeug zu verwenden, das eine manschettenähnliche Pressfläche ausbildet. Im Zustand der Verpressung ist diese Pressfläche unmittelbar einem O-Ring, aufgenommen in dem Verpressfitting, zugeordnet. Aufgrund gegebener Toleranzen sowohl im Pressfitting wie auch in dem Verbundrohr und nicht zuletzt auch in dem Presswerkzeug, lassen sich bei einer Verpressung aber nicht immer die Bedingungen erreichen, die in vorgenanntem Stand der Technik vorausgesetzt sind.

Die Erfindung beschäftigt sich daher insofern mit der Aufgabe, eine Kombination aus einem Verpressfitting und einem Presswerkzeug anzugeben, die auch unter Berücksichtigung von Toleranzen möglichst zuverlässig zu einem zufriedenstellenden Verpressergebnis führt.

Hierzu schlägt die Erfindung den Gegenstand des Anspruches 1 vor, wobei darauf abgestellt ist, dass die Ausformungen als Rippen gebildet sind und im Verpresszustand eine erste Rippe einer ersten Nut des Pressfittings und eine zweite Rippe einer zweiten Nut des Pressfittings zugeordnet ist und dass jedenfalls eine der Rippen in Überdeckung zu der ersten oder zweiten Nut ausgebildet ist. Dadurch, dass die Pressflächen des Presswerkzeuges rippenartig ausgebildet sind und zudem beide Pressflächen jeweils einer Nut mit darin aufgenommenem Dichtelement, wie insbesondere einem O-Ring zugeordnet sind, und eine Nut in Überdeckung zu einer Rippe ist, lässt sich auch unter ungünstigen Toleranzpaarungen ein zufriedenstellendes Verpressergebnis erzielen. Im einzelnen ist zur näheren Ausgestaltung auf die Unteransprüche zu verweisen.

Gegenstand der Erfindung ist im weiteren ein Verpressfitting zur Herstellung einer Verpressverbindung zwischen dem Pressfitting und einem Kunststoff-Verbundrohr mittels einer Verpresshülse, wobei an dem Verpressfitting eine oder mehrere umlaufende Nuten mit zwei gegenüberliegenden Nutwänden zur Aufnahme eines Dichtungselementes ausgebildet sind.

Bei den bekannten Verpressfittings, wozu beispielsweise wiederum auf die DE 197 21078 A1 zu verweisen ist, sind die Nutwände jeweils in gleicher Höhe ausgebildet. Das Dichtelement überragt die Nutwände, kann aber auch vollständig hierin aufgenommen sein.

Im Hinblick auf eine angestrebte Dichtigkeit der Pressverbindung wie auch die Durchführung der Pressverbindung als solche ist diese bekannte Ausgestaltung noch nicht zufriedenstellend.

Die Erfindung beschäftigt sich daher mit der Aufgabe, ein Pressfitting mit in Nuten eingelegten Dichtelementen anzugeben, der für die Durchführung einer Verpressverbindung vorteilhaft ausgebildet ist.

Diese Aufgabe ist beim Gegenstand des Anspruches 7 gelöst, wobei darauf abgestellt ist, dass die Nutwände eine unterschiedliche Höhe aufweisen. Dadurch, dass eine unterschiedliche Höhe der Nutwände gegeben ist, ist die Öffnungsweite der Nut, bei Verbindung der Scheitel der Nutwände, größer als es der Breite der Nut entspricht. Eine Verdrängung von Material in die Nut beim Verpressen ist daher besser möglich. Zwar kann dies auch zu einer Beschädigung eines O-Ringes führen. Da aber aufgrund von Toleranzunterschieden nicht immer beide Nuten eines Pressfittings gleichmäßig beaufschlagt werden beim Verpressen, kann die Zerstörung eines O-Ringes hingenommen werden. Insbesondere ist diese Maßnahme auch vorteilhaft in Kombination mit einem Gegenstand, der vorgeschriebenen Ansprüche 1-6.

Darüber hinaus ermöglicht es die Lehre dieser Erfindung, eine Nut als eigenen Sägezahn zu bilden, da die in Einschubrichtung erste Nutwand bevorzugt höher ausgebildet ist als die in Einschubrichtung zweite Nutwand und somit selbsttätig einem Zurückziehen des eingeschobenen Verbundrohres entgegenwirken kann. Zur weiteren Ausgestaltung der Erfindung insoweit wird auf die Maßnahmen der Ansprüche 8-12 verwiesen.

Gegenstand der Erfindung ist im weiteren eine Presshülse zur Halterung durch Verpressung eines zwischengeschobenen Verbundrohres auf einem Pressfitting, wobei die Verpresshülse in Einschubrichtung des Rohres vorne eine nach radial außen vorstehende, sickenartige erste Ausformung aufweist und eine weitere in Einschubrichtung des Rohres hinten an der Presshülse ausgebildete, nach auβen vorstehende zweite Ausformung. Eine derartige Presshülse ist gleichfalls aus der bereits genannten DE 197 21 078 A 1 bekannt. Die in Einschubrichtung hintere Ausformung ist allerdings mit einem sehr geringen Ausführungsgrad ausgebildet. Zudem sind die Ausformungen nicht in besonderer Weise an ein Presswerkzeug angepasst. Dies kann dazu führen, dass das Presswerkzeug nicht in dem gewünschten Bereich zur Verpressung angesetzt wird.

Insofern besteht die Aufgabe der Erfindung darin, eine Presshülse mit Ausformungen anzugeben, die zu einer zuverlässigeren Verpressung führen.

Diese Aufgabe ist zunächst und im wesentlichen beim Gegenstand des Anspruches 13 gelöst, wobei darauf abgestellt ist, dass ein Abstand in Einschubrichtung des Rohres zwischen der ersten und der zweiten Ausformung an die Breite eines zur Verpressung die Presshülse umfangenden Presswerkzeuges angepasst ist. Hierdurch ist erreicht, dass das Presswerkzeug, insbesondere an dem Presswerkzeug etwa ausgebildete Pressflächen oder Pressrippen, jeweils einem vorgegebenen Ort des Pressfittings zuverlässig zugeordnet sind.

Weitere Ausgestaltungen auch dieses Gedankens der Erfindung sind in den weiteren Ansprüchen enthalten.

Wenn auch die weiteren Ansprüche zu den genannten Gegenständen vorrangig weitere Ausbildungen des jeweiligen Hauptgedankens betreffen, können sie aber doch auch im Rahmen der Anmeldung unabhängige Bedeutung haben und sind jedenfalls nicht notwendig mit Merkmalen vorgeschalteter Ansprüche kombiniert zu sehen.

Der Gegenstand des Anspruches 13 ist hinsichtlich der Sickenausformung insbesondere auch in Kombination mit den zuvor beschriebenen Gegenständen zu sehen. Die zuverlässige Anordnung des Presswerkzeuges, mit daran auch noch ausgebildeten Pressrippen, in bevorzugter Zuordnung zu den Nuten des Pressfittings, führt insgesamt zu einem wiederholbar sehr zuverlässigen Pressergebnis.

Gegenstand der Erfindung ist auch eine Presshülse zur Halterung und Verpressung eines zwischengeschobenen Rohres, insbesondere Verbundrohres, auf einem Pressfitting, wobei die Presshülse in Einschubrichtung des Rohres an ihrem vorderen Ende eine radial nach innen gerichtete Abwinklung aufweist, die zur Halterung der Presshülse an dem Pressfitting in eine zugeordnete, zu der Abwinklung an dem Pressfitting ausgebildete umlaufende Nut eingreift.

Bezüglich einer solchen, aus der Praxis bekannten Verpresshülse stellt sich die Aufgabe, eine fertigungstechnisch, beim Aufschieben der Verpresshülse auf den Pressfitting gegebene Verbesserung zu erreichen.

Die Erfindung schlägt hierzu den Gegenstand des Anspruches 15 vor, wobei darauf abgestellt ist, dass die Abwinklung aus einer Mehrzahl von in Umfangsrichtung kreisabschnittsförmig freigeschnittenen Bereichen besteht. Es sind so einzelne Abschnitte gebildet, die für sich jeweils einfacher, und damit auch in der Summe leichter zu verbiegen sind. Denn auf eine Dichtigkeit kommt es in diesem Bereich nicht an. Nur auf eine zuverlässige, feste Halterung. Weitere Einzelheiten hierzu sind insbesondere den Ansprüchen 16 - 18 zu entnehmen.

Nachstehend ist die Erfindung desweiteren anhand der beigefügten Zeichnung, die jedoch lediglich Ausführungsbeispiele darstellt, erläutert. Hierbei zeigt:
Fig. 1 eine Seitenansicht eines Pressfittings mit aufgesetzter Presshülse und Presswerkzeug (teilweise);
Fig. 2 eine Presshülse in Stirnansicht;
Fig. 3 eine Presshülse im Längsschnitt;

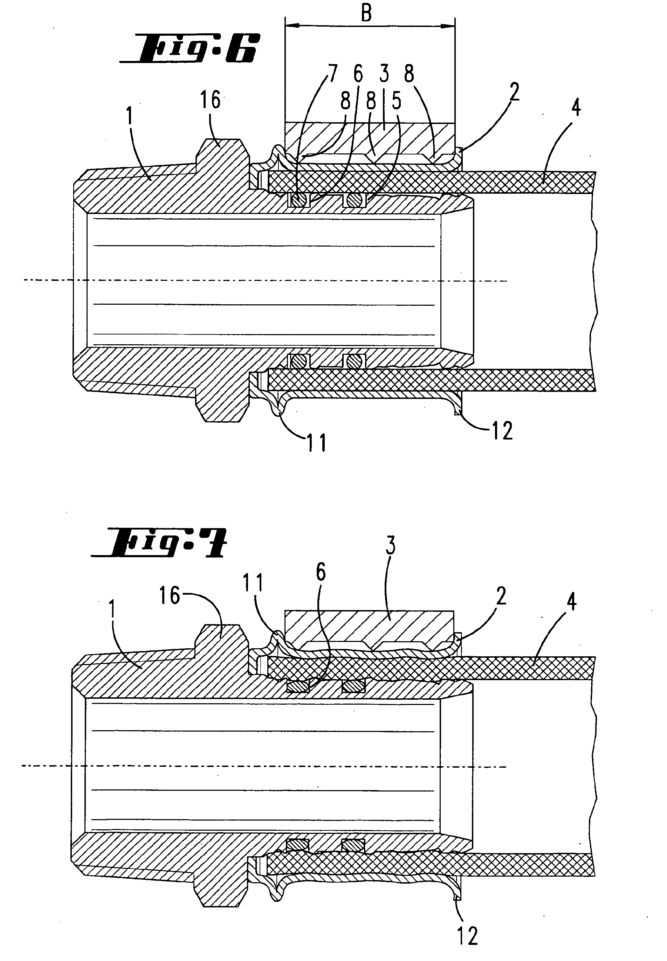

Fig. 4 eine Presshülse gemäß Fig. 3 aufgesetzt auf einen Pressfitting in der Seitenansicht;
Fig. 5 der Gegenstand gemäß Fig. 4 im Längsschnitt;
Fig. 6 der Gegenstand gemäß Fig. 5 mit eingeschobenem Verbundrohr und angedeutetem Presswerkzeug, vor der Verpressung;
Fig. 7 der Gegenstand gemäß Fig. 6 nach der Verpressung;

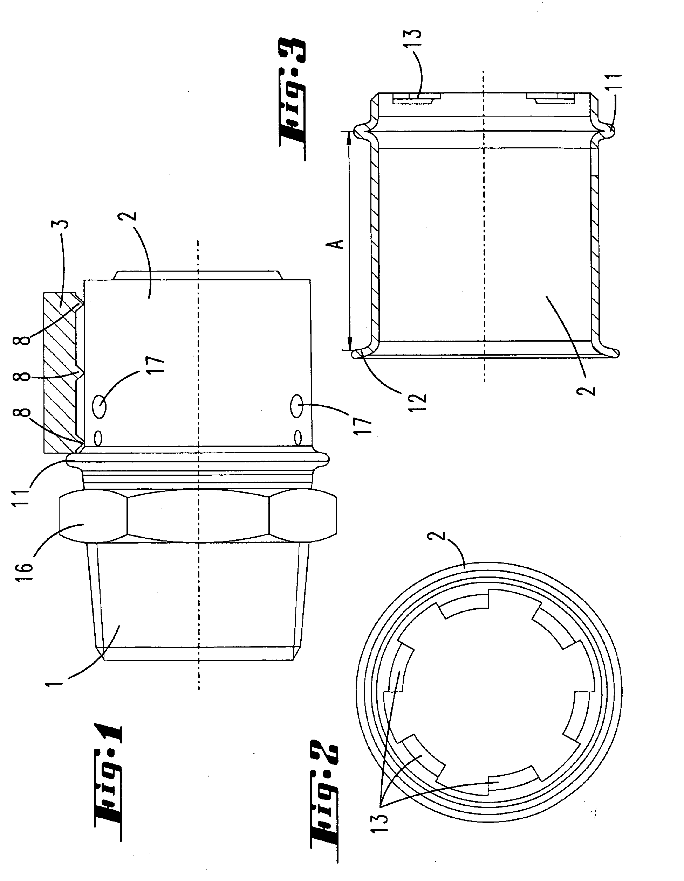

Dargestellt und beschrieben ist zunächst mit Bezug zu Fig. 1 ein Pressfitting 1 mit aufgeschobener und an dem Pressfitting gehalterter Presshülse 2 sowie aufgesetztem, jedoch lediglich angedeutetem Presswerkzeug 3.

Wie in weiterer Einzelheit insbesondere Fig. 6 zu entnehmen ist, sind an dem Pressfitting eine in Einschubrichtung des Verbundrohres 4 erste Nut 5 und zweite Nut 6 ausgebildet, mit jeweils eingesetztem Dichtelement 7, hier in Form eines O-Ringes.

An dem Presswerkzeug 3 sind unterseitig, zugeordnet der Presshülse 2 umlaufende erste, zweite und dritte Rippen 8 ausgebildet.

Eine erste Rippe ist unmittelbar in Überdeckung zu der zweiten Nut 6 vorgesehen, während eine zweite Rippe in Nachbarschaft zu der ersten Nut 5 ausgebildet ist. Die Nachbarschaft ist derart, dass der Abstand weniger als die Breite der Nut 5 beträgt. Die Pressrippen 8 haben einen dreiecksförmigen Querschnitt mit einer zu der Presshülse 2 weisenden Spitze.

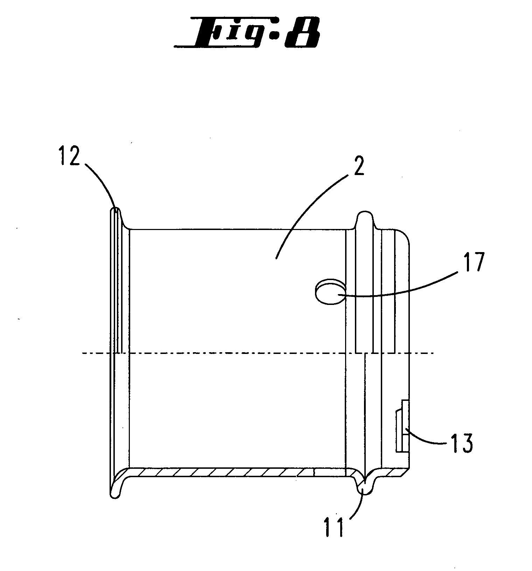

Der Verpressfitting selbst geht in seiner Ausgestaltung beispielsweise aus Fig. 5 hervor. Hierbei ist wesentlich, dass die Seitenwände der ersten bzw. zweiten Nut 5, 6, also die Seitenwände 9 und 10 unterschiedlich hoch ausgebildet sind. Die Seitenwand 9 ist höher ausgebildet als die Seitenwand 10. Das eingelegte Dichtelement, der O-Ring 7, überragt allerdings beide Seitenwände, naturgemäß die Seitenwand 9 weniger als die Seitenwand 10. Der O-Ring kann aber auch mit einer solchen Dicke vorgesehen sein bzw. die Seitenwände 9, 10 mit einer solchen Höhe, dass jedenfalls die Seitenwand 9 den O-Ring bzw. das Dichtelement höhenmäßig überragt.

Aus dem Verpresszustand gemäß Fig. 7 ist zu erkennen, dass das Verbundrohr 4, es handelt sich beispielsweise um ein Aluminiumrohr, das innen- und/oder außenseitig von einem Kunststoffmantel überdeckt ist, stärker in die zweite Nut 6 und etwas geringer in die erste Nut 7 eingearbeitet ist, aufgrund der Verpressung. Hierbei mag es unter Umständen zu einer Beschädigung des O-Ringes in der zweiten Nut 6 kommen. Jedoch nicht in der ersten Nut 7. Auch wenn die Toleranzen so sind, dass etwa die in Einschubrichtung vordere Rippe 8 des Presswerkzeuges nicht in Überdeckung zu der zweiten Nut 6 liegen sollte, liegt dann aber die zweite Rippe 8 in Überdeckung zu der ersten Nut 5, so dass auch in solch ungünstigen Toleranzpaarungen eine sichere Verpressung erreicht ist.

Die Presshülse, die in Fig. 3 dargestellt ist, ist unterschiedlich zu der Presshülse, die in Fig. 1 dargestellt ist. Insbesondere ist bei der Presshülse gemäß Fig. 3 nicht nur eine sickenartige erste Ausformung 11 ausgebildet, sondern auch endseitig bezüglich der Einschubrichtung des Verbundrohres 4 eine zweite Ausformung 12. Ein axialer Abstand A zwischen den Ausformungen 11, 12 ist, wie sich etwa aus Fig. 6 ergibt, an eine zugeordnete Breite B eines Presswerkzeuges angepasst. Dies derart, dass das Presswerkzeug vollständig zwischen den Ausformungen 11,12 bei der Verpressung aufgenommen ist.

Bezogen auf die Länge der Verpresshülse 2 sind insbesondere dann, wenn Rippen 8 an dem Presswerkzeug ausgebildet sind, diese immer in einer sehr genauen Zuordnung bezüglich der axialen Länge der Verpresshülse 2.

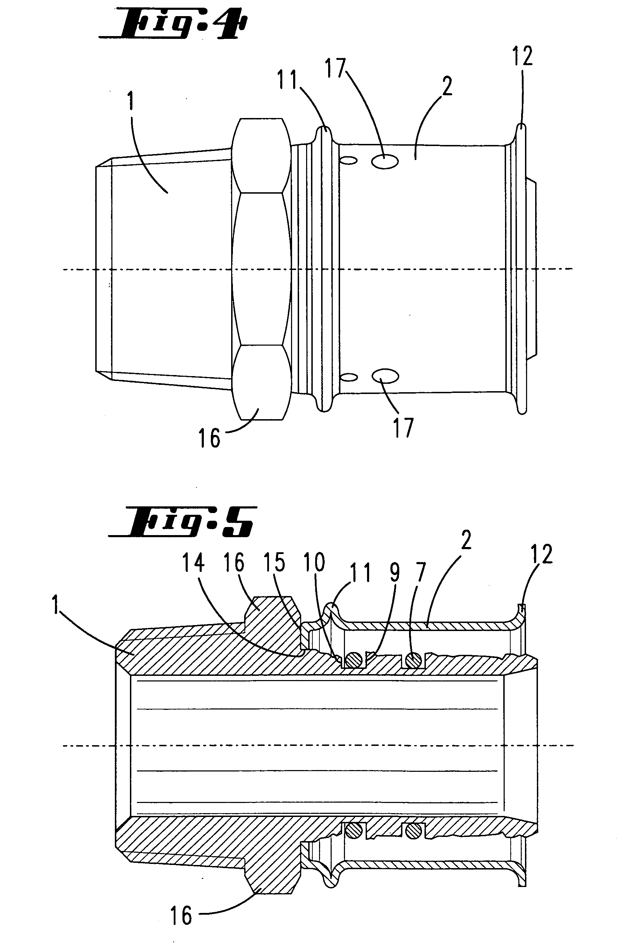

Die Presshülse 2 weist vorteilhafter Weise insbesondere, wie etwa aus Fig. 2 hervorgeht, Abwinklungen 13 auf, die zur Halterung der Presshülse 2 an dem Pressfitting 1 vorgesehen sind. Die Abwinklungen greifen in eine umlaufende Nut 14 des Pressfittings ein. Die Verpresshülse ist damit radial praktisch unbeweglich an dem Pressfitting 1 gesichert.

Die Abwinklungen 13 bestehen aus einer Mehrzahl von in Umfangsrichtung kreisabschnittsförmig freigeschnittenen Bereichen der Presshülse.

Beim Aufschieben der Presshülse 1 auf den Pressfitting 1 sind die Abwinklungen in einer ersten Ausführungsform so vorgesehen, dass sie an die Flanke eines die Nut 14 bildenden Wulstes stoßen und beim weiteren Aufschieben hierdurch rückgepfeilt (wenn auch nur wenig) abgebogen werden, bis sie den Wulst überlaufen können und so zur Überdeckung zu der Nut 14 kommen. Die Nut 14 kann eine sehr geringe Tiefe aufweisen. Im Extrem kann es sich auch nur um einen Sockel handeln, der übergangslos in eine Flanke 15 (siehe auch weiter unten) einläuft. Da es sich bei den Presshülsen um einen weichgeglühten Stahl sehr geringer elastischer Verformungsfähigkeit handelt, kommt es sehr rasch zu einer plastischen Verformung in der beschriebenen Weise. Die elastische Rückfederung ist sehr gering. Ein weiteres Drücken in Richtung der Flanke 15 des Wulstes 16 (Mehrkantprofil) an dem Pressfitting 1 führt zu einem radialen Eindrücken des zugeordneten Endbereiches der Presshülse 1, an welchem die Ausformungen 13 ausgebildet sind. Gegebenenfalls kann aber auch noch durch radialen Druck diese Bewegung unterstüzt werden.

Eine Alternative sieht auch vor, dass die Ausformungen 13 zunächst nach vorne gepfeilt (im Querschnitt) angeordnet sind, so dass sie ohne weiteres den genannten Wulst überlaufen können. Durch Anlage an der Flanke 15 werden sie dann bis in die Senkrechte (mindestens) abgebogen und greifen so verriegelnd in die Nut 14 ein.

Von Bedeutung ist auch, dass an der Presshülse 1 eine oder mehrere Kontrollausnehmungen 17 ausgebildet sind. Diese Kontrollausnehmungen liegen, wie ersichtlich, unmittelbar neben der Ausformung 11, zugewandt der Ausformung 12. Nämlich derart, dass sie zumindest teilweise in Überdeckung mit der zweiten Nut 6 sind und so auch optisch das vollständige Aufschieben, jedenfalls bis über die zweite Nut 6 des Verbundrohres 4 kontrolliert werden kann. Wenn in der Ausnehmung das Verbundrohr erscheint, ist es jedenfalls auch in Überdekkung zu der zweiten Nut 6. Zudem kann die Ausnehmung auch wie an sich bekannt, zur Kontrolle bei Verpressung dienen. Hier kann ggf., sollte noch eine Undichtigkeit gegeben sein, Wasser austreten, also eine Undichtigkeit erkannt werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Kombination eines Pressfittings mit einem ggf. aus zwei Pressbacken bestehenden Presswerkzeug, wobei der Pressfitting mindestens zwei umlaufende Nuten zur Aufnahme von Dichtungsringen aufweist und an dem Presswerkzeug im Pressbereich mindestens zwei umlaufende Ausformungen ausgebildet sind, **dadurch gekennzeichnet, dass** die Ausformungen als Rippen gestaltet sind und im Verpresszustand eine erste Rippe einer ersten Nut des Pressfittings und eine zweite Rippe einer zweiten Nut des Pressfittings zugeordnet ist und dass jedenfalls eine der Rippen in Überdeckung zu der ersten oder zweiten Nut ausgebildet ist.

2. Kombination nach Anspruch 1 oder insbesondere danach, **dadurch gekennzeichnet, dass** die zweite Rippe seitlich benachbart zu der zweiten oder ersten Nut angeordnet ist.

3. Kombination nach einem oder mehreren der vorhergehenden Ansprüche oder insbesondere danach, **dadurch gekennzeichnet, dass** die zweite Rippe im Abstandsbereich einer doppelten Nutbreite benachbart angeordnet ist.

4. Kombination nach einem oder mehreren der vorhergehenden Ansprüche oder insbesondere danach, **dadurch gekennzeichnet, dass** die zweite Rippe im Abstandsbereich einer Nutbreite benachbart angeordnet ist.

5. Kombination nach einem oder mehreren der vorhergehenden Ansprüche oder insbesondere danach, **dadurch gekennzeichnet, dass** die zweite Rippe im Abstandsbereich einer halben Nutbreite angeordnet ist.

6. Kombination nach einem oder mehreren der vorhergehenden Ansprüche oder insbesondere danach, wobei im Verpresszustand zwischen dem Fitting und dem Presswerkzeug eine Verpresshülse und ein eingeschobenes Verbundrohr angeordnet ist, **dadurch gekennzeichnet, dass** in Einschubrichtung des Verbundrohres zunächst die zweite Rippe angeordnet ist.

7. Verpressfitting zur Herstellung einer Verpressverbindung zwischen dem Pressfitting und einem Kunststoff-Verbundrohr mittels einer Verpresshülse, wobei an dem Verpressfitting eine oder mehrere umlaufende Nuten mit zwei gegenüberliegenden Nutwänden zur Aufnahme eines Dichtungselementes ausgebildet sind, **dadurch gekennzeichnet, dass** die Nutwände eine unterschiedliche Höhe aufweisen.

8. Verpressfitting nach Anspruch 7 oder insbesondere danach, **dadurch gekennzeichnet, dass** die in Einschubrichtung des Verbundrohres erste Nutwand höher ausgebildet ist als die gegenüberliegende Nutwand.

9. Verpressfitting nach einem oder mehreren der vorhergehenden Ansprüche oder insbesondere danach, **dadurch gekennzeichnet, dass** die höhere Nutwand eine Höhe entsprechend dem eingelegten, unverpressten Dichtelement aufweist.

10. Verpressfitting nach einem oder mehreren der vorhergehenden Ansprüche oder insbesondere danach, **dadurch gekennzeichnet, dass** die Höhe der höheren Nutwand etwas geringer ist als die Höhe des unverpressten Dichtelementes.

11. Verpressfitting nach einem oder mehreren der vorhergehenden Ansprüche oder insbesondere danach, **dadurch gekennzeichnet, dass** die Höhe der höheren Nutwand ein Zwanzigstel bis drei Zehntel geringer ist als die Höhe des unverpressten Dichtelementes.

12. Verpressfitting nach einem oder mehreren der vorhergehenden Ansprüche oder insbesondere danach, **dadurch gekennzeichnet, dass** ein mit einer Längsachse des Fittings angeschlossener Winkel der Verbindungslinie der oberen Enden der Nutwände - im Querschnitt - zwischen 0,5° und 20° liegt.

13. Presshülse zur Halterung durch Verpressung eines zwischengeschobenen Verbundrohres auf einem Pressfitting, wobei die Verpresshülse in Einschubrichtung des Rohres vorne eine nach radial außen vorstehende, sickenartige erste Ausformung aufweist, und eine weitere in Einschubrichtung des Rohres hinten an der Presshülse ausgebildete, nach außen vorstehende zweite Ausformung derart, dass ein Abstand in Einschubrichtung des Rohres zwischen der ersten und der zweiten Ausformung an die Breite eines zur Verpressung die Presshülse umfangenden Presswerkzeuges angepasst ist.

14. Presshülse nach Anspruch 13 oder insbesondere danach, **dadurch gekennzeichnet, dass** die zweite Ausformung als im Querschnitt zumindest viertelkreisförmige Aufweitung geformt ist.

15. Presshülse zur Halterung und Verpressung eines zwischengeschobenen Rohres, insbesondere Verbundrohres, auf einem Pressfitting, wobei die Presshülse in Einschubrichtung des Rohres an ihrem vorderen Ende eine radial nach innen gerichtete Abwinklung aufweist, die zur Halterung der Presshülse an dem Pressfitting in eine zugeordnete, zu der Abwinklung an dem Pressfitting ausgebildete umlaufende Nut eingreift, **dadurch gekennzeichnet, dass** die Abwinklung aus einer Mehrzahl von in Umfangsrichtung kreisabschnittsförmig freigeschnittenen Bereichen besteht.

16. Presshülse nach Anspruch 15 oder insbesondere danach, **dadurch gekennzeichnet, dass** die Presshülse im Bereich der Lappen radial gestaucht ist.

17. Presshülse nach einem oder mehreren der vorhergehenden Ansprüche oder insbesondere danach, **dadurch gekennzeichnet, dass** die Presshülse aus einem weichgeglühten Stahl geringer elastischer Verformungsfähigkeit besteht.

18. Presshülse nach einem oder mehreren der vorhergehenden Ansprüche oder insbesondere danach, **dadurch gekennzeichnet, dass** in der Presshülse, zugeordnet an einer ein Dichtelement aufnehmenden Nut in dem Pressfitting, eine Kontrollausnehmung ausgebildet ist.
